# EUROPÄISCHE PATENTANMELDUNG

(11) **EP 1 737 264 A1**
(43) Veröffentlichungstag der Anmeldung: **27.12.2006**
(21) Anmeldenummer: 06010544.2
(22) Anmeldetag: 22.05.2006
(51) Int. Cl.: H04Q 7/38, H04L 12/56

(54) **Verfahren zur Datenübertragung, Mobiltelefon, elektronisches Gerät und Computerprogrammprodukt**

(30) Priorität: 20.06.2005 DE 102005028480
(71) Anmelder: Fujitsu Siemens Computers GmbH, 80807 München (DE)
(72) Erfinder: Filimon, Diana, 86368 Gersthofen (DE); Heiss, Stefan, 86399 Bobingen (DE); Fuhrmann, Udo, 86438 Kissing (DE)
(74) Vertreter: Epping - Hermann - Fischer

(57) **Zusammenfassung**

Die Erfindung betrifft ein Verfahren zur Datenübertragung mit einer Verbindung (4, 5) zwischen einem elektronischen Gerät (1) und einem Datennetz (7) über ein Mobiltelefon (2), bei dem das elektronische Gerät (1) ständig nach Mobiltelefonen (2) sucht, die Gerätekennungen (8) über ein drahtloses Nahbereichsfunknetzwerk (3) bereitstellen und eine Liste (17) mit allen aktuell gefundenen Mobiltelefonen (2) und anhand vorbestimmter Merkmale bestimmten Priorität (13) der Mobiltelefone (2) führt. Beim Erkennen einer Änderung eines Listeneintrages überprüft das elektronische Gerät (1), ob durch die Änderung ein Mobiltelefon (2) mit einer höheren Priorität (13) für eine Verbindung (4, 5) zwischen dem elektronischen Gerät (1) und dem Datennetzwerk (7) zur Verfügung steht. Ist dies der Fall, wird eine bestehende Verbindung über ein Mobiltelefon (2) beendet und statt dessen eine neue Verbindung über das Mobiltelefon (2) aufgebaut, das eine höhere Priorität (13) aufweist.

Die Erfindung betrifft auch ein Mobiltelefon (2), ein elektronisches Gerät (1) und ein Computerprogrammprodukt (11) zur Durchführung des Verfahrens.

## Beschreibung

Die Erfindung betrifft ein Verfahren zur Datenübertragung mit einer Verbindung zwischen einem elektronischen Gerät und einem Datennetz über ein Mobiltelefon. Des Weiteren betrifft die Erfindung Vorrichtungen, die zur Durchführung des Verfahrens geeignet sind.

Mobilfunknetze werden zunehmend auch zur Datenübertragung durch verschiedene elektronische Endgeräte genutzt. Beispielsweise ist es möglich, tragbare Computer oder elektronischen Organizer, so genannte Personal Digital Assistants (PDAs), über ein Mobiltelefon mit dem Internet zu verbinden. Dabei werden aus technischer Sicht zwei Datenverbindungen aufgebaut, die erste zwischen dem Endgerät und dem Mobiltelefon und die zweite zwischen dem Mobiltelefon und dem Datennetz.

Zum Herstellen der ersten Verbindung sind mehrere Möglichkeiten bekannt. Außer kaum mehr gebräuchlichen Kabellösungen kann eine Verbindung auch über eine drahtlose Infrarot- (IrDA) oder Nahbereichsfunkverbindung nach dem IEEE Standard 802.15.1 (Bluetooth) aufgebaut werden. Bluetooth Mobiltelefone stellen hierzu ein spezielles Profil, das sogenannte Dial Up Network (DUN) Profil, bereit. Das Bluetooth DUN Profil übernimmt auch den Aufbau der benötigten zweiten Verbindung von dem Mobiltelefon zu dem Datennetz.

Stehen mehrere Mobiltelefone für einen Verbindungsaufbau zur Verfügung, zum Beispiel weil sich mehrere Personen mit eingeschalteten Bluetooth Mobiltelefonen in einer gemeinsamen Besprechung befinden, muss ein Benutzer das zu verwendende Mobiltelefon in der Regel manuell auswählen.

Alternativ ist es auch möglich, die Kennung eines stets zu verwendenden Mobiltelefons vorzugeben, etwa die Gerätekennung eines eigenen Mobiltelefons.

Ein Nachteil bei Datenübertragungen über eine nach dem Stand der Technik aufgebauten Verbindungen ist, dass eine Verbindung manuell durch einen Benutzer beendet werden muss, bevor eine Verbindung über ein anderes Mobiltelefon zur Datenübertragung verwendet werden kann.

Ein Wechsel der Verbindungen ist für den Benutzer daher unkomfortabel und erfordert zudem in der Regel, dass Anwendungen unterbrochen werden müssen, die zur Datenübertragung eingesetzt werden. Des Weiteren ist für den Benutzer nur schwer zu erkennen, welches Mobiltelefon für eine optimale Verbindung gewählt werden sollte.

Aufgabe der Erfindung ist es daher, ein Verfahren zu beschreiben, durch das eine Datenübertragung mit einer Verbindung zwischen einem elektronischen Gerät und einem Datennetzwerk über ein Mobiltelefon für einen Benutzer komfortabler gestaltet wird.

Die Aufgabe wird erfindungsgemäß durch ein Verfahren zur Datenübertragung mit einer Verbindung zwischen einem elektronischen Gerät und einem Datennetz über ein Mobiltelefon gelöst, bei dem das elektronische Gerät ständig nach Mobiltelefonen sucht, die Gerätekennungen über ein drahtloses Nahbereichsfunknetzwerk bereitstellen, und eine Liste mit allen aktuell gefundenen Mobiltelefonen und anhand vorbestimmter Merkmale bestimmten Prioritäten der Mobiltelefone führt. Beim Erkennen einer Änderung eines Listeneintrages überprüft das elektronische Gerät, ob ein Listeneintrag für ein Mobiltelefon mit einer höheren Priorität als dem für eine bestehende Verbindung verwendete Mobiletelefons existiert. Bei positiver Überprüfung wird die bestehende Verbindung beendet, ein Mobiltelefon mit einer höheren Priorität aus der Liste ausgewählt, und eine Verbindung zwischen dem elektronischen Gerät und dem Datennetzwerk über das ausgewählte Mobiltelefon aufgebaut. Bei negativer Überprüfung wird die bestehende Verbindung beibehalten. Schließlich werden Daten von und zu dem Datennetz durch das elektronische Gerät über die Verbindung übertragen.

Durch die erfindungsgemäße Lösung vermag sich die Verbindung und damit die Datenübertragung an geänderte Umstände anzupassen.

Bricht zum Beispiel eine bestehende Verbindung zusammen, weil ein Besprechungsteilnehmer mit einem aktuell zur Verbindung genutztem Mobiltelefon das Zimmer verlässt, kann automatisch eine Verbindung über ein anderes Mobiltelefon aufgebaut und zur Datenübertragung genutzt werden. Umgekehrt kann eine bestehende Verbindung beendet werden, wenn ein weiteres Mobiltelefon hinzukommt, das es erlaubt, eine bessere oder kostengünstiger Verbindung zu nutzen.

Erfindungsgemäß sucht das zur Datenübertragung eingesetzte elektronische Gerät ständig nach Mobiltelefonen, die Gerätekennungen über ein drahtloses Nahbereichsfunknetzwerk bereitstellen. Die Kennungen der gefundenen Mobiltelefone werden in einer Liste zusammen mit einer Priorität gespeichert. Sobald sich ein Listeneintrag ändert, wird überprüft, ob durch die Änderung ein Mobiltelefon mit einer höheren Priorität für einen Verbindungsaufbau zur Verfügung steht.

Besteht bereits eine Verbindung, wird diese zunächst beendet. Anschließend wird ein Mobiltelefon mit einer höheren Priorität ausgewählt und zum Aufbauen einer Verbindung zwischen dem elektronischen Gerät zu dem Datennetz über das ausgewählte Mobiltelefon verwendet. Besitzt das Mobiltelefon, über das gegenwärtig eine Verbindung bereitgestellt wird, bereits die höchste Priorität, wird diese beibehalten. Auf diese Weise ist gewährleistet, dass jeweils das Mobiltelefon mit der höchsten Priorität für eine Verbindung genutzt wird.

Die Priorisierung der unterschiedlichen Mobiltelefone kann beispielsweise manuell durch einen Benutzer vorgenommen werden. Alternativ ist es auch möglich, eine automatische Priorisierung entsprechend einer festgestellten Verbindungsqualität vorzunehmen. Des Weiteren ist es möglich, eine automatische Bestimmung anhand von Tarifinformationen durchzuführen, wobei die Tarifinformationen entweder in dem elektronischen Gerät gespeichert sind oder durch die Mobiltelefone zur Verfügung gestellt werden. Hierdurch ist es möglich, jeweils den günstigsten Tarif für die Verbindung zu nutzen.

Weitere Einzelheiten und Ausgestaltungen der Erfindung sind in den Unteransprüchen angegeben.

Die Erfindung wird nachfolgend an einem Ausführungsbeispiel anhand der Zeichnungen näher erläutert. In den Zeichnungen zeigen:
- Figur 1: eine Anordnung bestehend aus einem elektronischen Gerät und drei Mobiltelefonen,
- Figur 2: eine schematische Darstellung des Aufbaus eines elektronischen Gerätes,
- Figur 3: eine Tabelle mit gefundenen individuellen Gerätekennungen und den Gerätekennungen zugeordneten Prioritäten,
- Figur 4: ein Ablaufdiagramm des erfindungsgemäßen Verfahrens,
- Figur 5: eine Anordnung, bei der ein Mobiltelefon aus dem Bereich eines Nahbereichsfunknetzwerkes entfernt wird,
- Figur 6: eine Anordnung, bei der ein Mobiltelefon in den Bereich eines Nahbereichsfunknetzwerkes eingeführt wird.

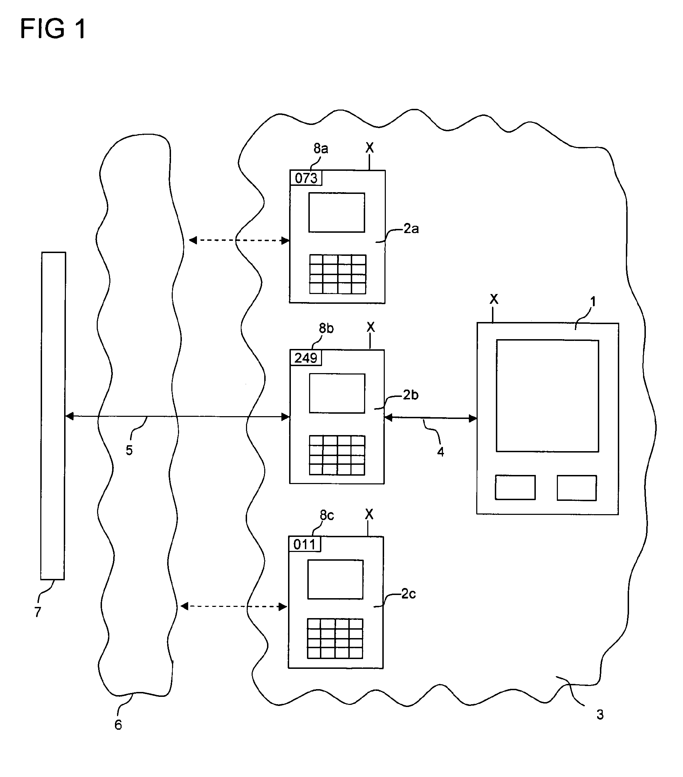

Figur 1 zeigt eine Anordnung bestehend aus einem elektronischen Gerät 1, im Ausführungsbeispiel ein PDA, und drei Mobiltelefonen 2a, 2b und 2c. Die Mobiltelefone 2a, 2b und 2c weisen jeweils eine individuelle Kennung 8a, 8b und 8c auf. Das Gerät 1 und die Mobiltelefone 2 befinden sich in demselben Nahbereichsfunknetzwerk 3. Zwischen dem elektronischen Gerät 1 und dem zweiten Mobiltelefon 2b besteht eine Funkverbindung 4. Des Weiteren ist das Mobiltelefon 2b über eine weitere Funkverbindung 5 durch ein Mobilfunknetz 6 mit dem Internet 7 verbunden.

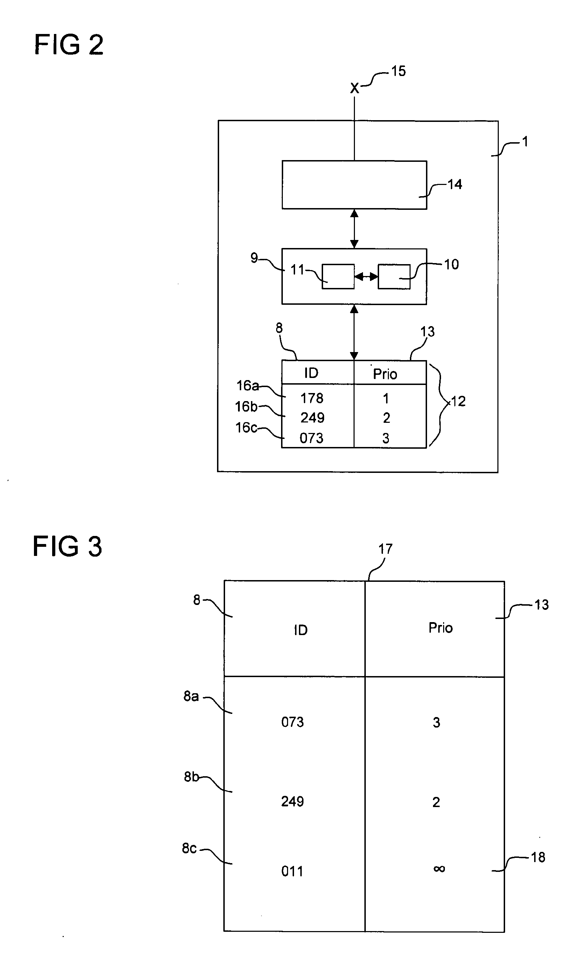

Figur 2 zeigt den schematischen Aufbau des elektronischen Gerätes 1. Auf einem Prozessor 9 läuft eine Anwendung 10, die eine Verbindung in das Internet 7 anfordert. Dazu greift die Anwendung 10 auf einen Verbindungsmanager 11 zu, der ebenfalls durch den Prozessor 9 ausgeführt wird. Der Verbindungsmanager 11 hat Zugriff auf eine Liste 12, die individuellen Kennungen 8 jeweils eine Priorität 13 zuordnet. Des Weiteren umfasst das elektronische Gerät 1 eine Sende-und Empfangsvorrichtung 14, die mit einer Antenne 15 verbunden ist.

Die Einträge der Liste 12 definieren beispielsweise die Benutzereinstellungen für das elektronische Gerät 1. Beispielsweise kann der erste Listeneintrag 16a der Kennung eines geschäftlich genutzten Mobiltelefons entsprechen, der zweite Listeneintrag 16b der Kennung eines privat genutzten Mobiltelefons und der Eintrag 16c der Kennung eines Mobiltelefons eines Arbeitskollegen entsprechen. Im dargestellten Ausführungsbeispiel sollen dabei niedrigere Prioritätszahlen einer höheren Priorität 13 entsprechen, d.h. das Mobiltelefon mit der niedrigsten Prioritätszahl wird bevorzugt für einen Verbindungsaufbau verwendet.

Der Verbindungsmanager setzt die Informationen der Liste 12 mit den Kennungen 8a, 8b und 8c der über die Sende- und Empfangseinrichtung 14 gefundenen Mobiltelefone 2a, 2b und 2c in Beziehung und erstellt daraus erstellt daraus eine weitere Liste 17. Die Liste 17 ist in Figur 3 in Tabellenform dargestellt. Sie weist eine linke Spalte auf, in der die Kennungen 8 der gefundenen Mobiltelefone 2a, 2b und 2c enthalten sind. Den Kennungen 8a und 8b der Mobiltelefone 2a und 2b sind dieselben Prioritäten 13 zugeordnet, die auch in der Liste 12 gespeichert sind. Die Kennung 8c des Mobiltelefons 2c ist in der Liste 12 nicht gespeichert und bekommt daher eine besondere Priorität 18 zugeordnet, die besagt, dass das zugeordnete Mobiltelefon 2c nicht zum Verbindungsaufbau verwendet werden soll. Alternativ kann die besondere Priorität 18 auch bedeuten, dass das Mobiltelefon 2c nur dann zu einem Verbindungsaufbau herangezogen wird, wenn kein anderes bekanntes Mobiltelefon zur Verfügung steht.

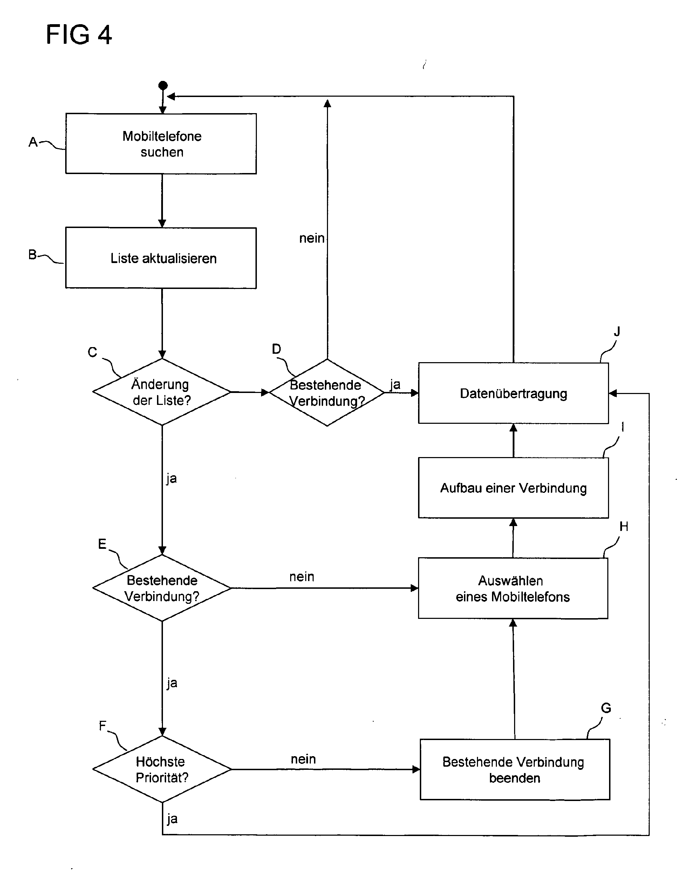

Figur 4 zeigt ein Ablaufdiagramm des erfindungsgemäßen Verfahrens zur Datenübertragung. In einem Schritt A sucht das elektronisches Gerät 1 nach Mobiltelefonen 2. Beispielsweise stellen Mobiltelefone nach dem Bluetooth Standard in regelmäßigen Abständen ihre individuellen Kennungen 8 zusammen mit ihren Geräteeigenschaften bereit. In einem Schritt B werden die so zur Verfügung gestellten Informationen durch das elektronische Gerät 1 gesammelt und dazu verwendet, die Liste 17 mit gefundenen Mobiltelefonen 2 aktuell zu halten.

In einem Schritt C wird überprüft, ob sich seit der letzten Überprüfung eine Änderung eines Listeneintrages ergeben hat. Ist dies nicht der Fall, wird im nachfolgenden Schritt D überprüft, ob eine aktuelle Verbindung besteht. In diesem Fall kann in einem Schritt J eine Datenübertragung vorgenommen werden. Wird in Schritt D jedoch keine bestehende Verbindung festgestellt, so wird das Verfahren mit dem Schritt A fortgesetzt, in dem erneut nach Mobiltelefonen 2 gesucht wird.

Wurde im Schritt C jedoch eine Änderung wenigstens eines Listeneintrages festgestellt, so wird in Schritt E überprüft, ob eine aktuelle Verbindung besteht. Ist dies der Fall, wird in einem weiteren Test im Schritt F überprüft, ob die bestehende Verbindung das Mobiltelefon 2 mit der höchsten Priorität 13 verwendet oder ob durch die Änderung ein Mobiltelefon 2 mit einer höheren Priorität 13 für eine Verbindung bereitsteht. Nutzt die bestehende Verbindung bereits das Mobiltelefon 2 mit der höchsten Priorität 13 wird die Datenübertragung im Schritt J fortgesetzt.

Steht jedoch ein Mobiltelefon 2 mit einer höheren Priorität 13 zum Verbindungsaufbau zur Verfügung, wird in einem Schritt G zunächst die bestehende Verbindung beendet und im nachfolgenden Schritt H ein Mobiltelefon mit einer höheren Priorität 13 ausgewählt. Das im Schritt H ausgewählte Mobiltelefon 2 wird im Schritt I zum Aufbau einer Verbindung verwendet. Nach Aufbau der Verbindung kann im Schritt J eine Datenübertragung vorgenommen werden.

Wurde im Schritt E nach Erkennung der Änderung im Schritt C keine aktuelle Verbindung festgestellt, so wird das Verfahren direkt im Schritt H mit dem Auswählen eines Mobiltelefons zum Verbindungsaufbau fortgesetzt.

In jedem Fall kehrt das Verfahren regelmäßig zum Schritt A zurück, in dem nach neuen Mobiltelefonen gesucht wird. Anders als bekannten Verfahren zum einmaligen Verbindungsaufbau, wird das dargestellte Verfahren ständig im Hintergrund ausgeführt. Dies gilt zumindest so lange, wie eine Anwendung 10 einen Zugriff auf das Internet 7 benötigt.

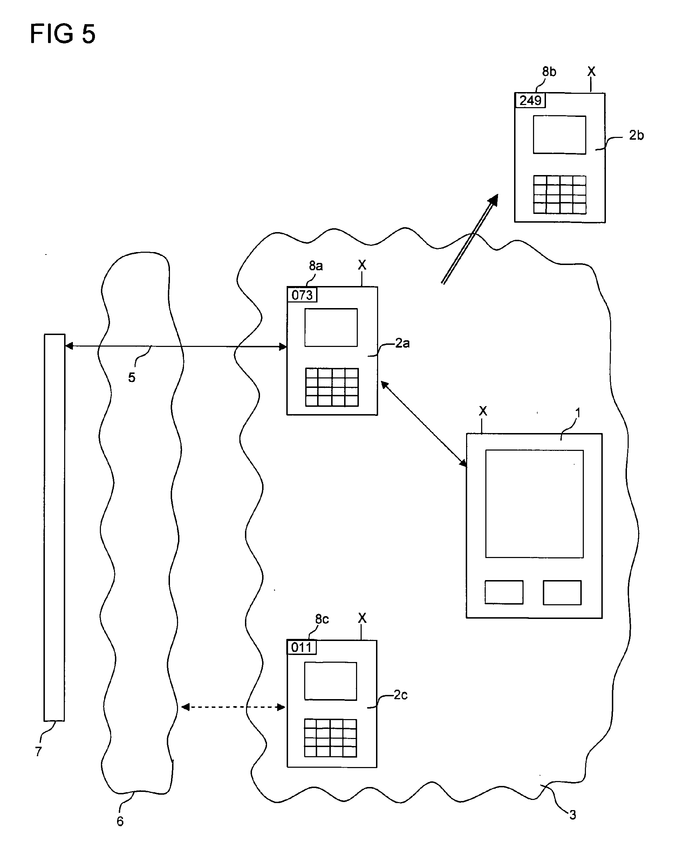

In der Figur 5 wurde das Mobiltelefon 2b gegenüber der in Figur 1 dargestellten Situation aus dem Nahbereichsfunknetzwerk 3 entfernt. Beispielsweise hat ein Teilnehmer einer Besprechung einen gemeinsamen Sitzungsraum verlassen und sein Mobiltelefon 2b mit sich genommen. Das Mobiltelefon 2b steht somit nicht mehr für eine Verbindung zwischen dem elektronischen Gerät 1 und dem Internet 7 zur Verfügung. Daher wählt das elektronische Gerät 1 nun das Mobiltelefon 2a mit der Kennung 8a für die Verbindung in das Internet 7. Denn das Mobiltelefon 8a besitzt die höchstwertigste Priorität 13 der verbleibenden Mobiltelefone 2a und 2c.

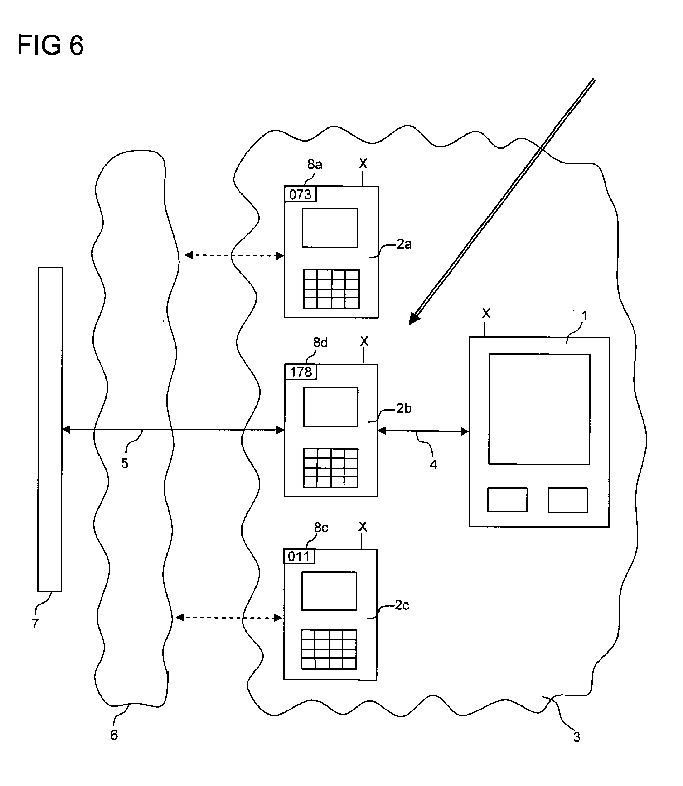

In der Figur 6 wird ein weiteres Mobiltelefon 2d dem Nahbereichsfunknetzwerk 3 hinzugefügt. Beispielsweise kann ein zusätzlicher Besprechungsteilnehmer in das Besprechungszimmer hereinkommen. Das hinzugekommene Mobiltelefon 2d besitzt die individuelle Kennung 8d. Diese besitzt die höchste Priorität 13 in der Liste 12. Beim Erkennen des Einbringens des Mobiltelefons 2d in das Nahbereichsfunknetzwerk 3 durch das elektronische Gerät 1 beendet dieses daher die erste Verbindung 4 zu dem Mobiltelefon 2a und baut statt dessen eine neue erste Verbindung 4 zu dem Mobiltelefon 2d auf. Das Mobiltelefon 2d baut seinerseits eine zweite Verbindung in das Internet 7 auf. Somit wird automatisch das Mobiltelefon 2d, das den höchsten Prioritätsrang in der Tabelle 12 aufweist, für die Verbindung des elektronischen Gerätes 1 mit dem Internet 7 benutzt.

Anstelle einer Liste 12 mit vorgegebenen Prioritäten 13 für bekannte Gerätekennungen 8 kann das elektronische Gerät 1 die verwendeten Prioritäten 8 auch automatisch bestimmen. In einer vorteilhaften Ausgestaltung der Erfindung überwacht das elektronische Gerät 1 die Qualität der ersten Funkverbindung 4 zwischen den Mobiltelefonen 2 und dem elektronischen Gerät 1. Dabei werden solche Mobiltelefone 2 bevorzugt zum Verbindungsaufbau mit einem Datennetz 7 benutzt, deren erste Verbindung eine besonders gute Verbindungsqualität aufweisen.

Alternativ kann auch die Verbindungsqualität der zweiten Funkverbindung 5 zwischen den Mobiltelefonen 2 und dem Mobilfunknetz 6 zur Bestimmung verwendet werden.

In einer weiteren vorteilhaften Ausgestaltung sind die aktuellen Tarifinformationen für eine Verbindung 5 durch die Mobiltelefone 2 in dem elektronischen Gerät 1 gespeichert. In Abhängigkeit einer dem elektronischen Gerät 1 bekannten Tageszeit können die gespeicherten Tarifinformationen der verschiedenen Mobiltelefone 2 benutzt werden, um eine Priorität 13 für die verschiedenen Mobiltelefone 2 zu bestimmen. Beispielsweise kann das geschäftlich genutzte Mobiltelefon 2d tagsüber einen günstigeren Tarif aufweisen als das privat genutzte Mobiltelefon 2b, während das privat genutzte Mobiltelefon 2b am Abend einen günstigeren Tarif aufweist.

Als Alternative zur Speicherung der Tarifinformationen in dem elektronischen Gerät 1 können diese auch durch das Mobiltelefon 2 oder den Betreiber des Mobilfunknetzwerkes 5 bereitgestellt werden. Auf diese Weise ist es stets möglich, eine Verbindung von dem elektronischen Gerät 1 zu dem Datennetzwerk 7 mit dem günstigsten aktuellen Tarif aufzubauen.

### Bezugszeichenliste

- 1: Elektronisches Gerät
- 2: Mobiltelefon
- 3: Nahbereichsfunknetzwerk
- 4: Erste Funkverbindung
- 5: Zweite Funkverbindung
- 6: Mobilfunknetz
- 7: Internet
- 8: Individuelle Kennung
- 9: Prozessor
- 10: Anwendung
- 11: Verbindungsmanager
- 12: Liste (der bevorzugten Mobiltelefone)
- 13: Priorität
- 14: Sende- und Empfangsvorrichtung
- 15: Antenne
- 16: Listeneintrag
- 17: Liste (der erkannten Mobiltelefone)
- 18: besondere Priorität

- A bis J: Verfahrensschritte

## Patentansprüche

1. Verfahren zur Datenübertragung mit einer Verbindung (4, 5) zwischen einem elektronischen Gerät (1) und einem Datennetz (7) über ein Mobiltelefon (2), bei dem das elektronische Gerät (1)
- ständig nach Mobiltelefonen (2) sucht, die Gerätekennungen (8) über ein drahtloses Nahbereichsfunknetzwerk (3) bereitstellen,
- eine Liste (17) mit allen aktuell gefundenen Mobiltelefonen (2) und anhand vorbestimmter Merkmale bestimmten Prioritäten (13) der Mobiltelefone (2) führt und
- beim Erkennen einer Änderung eines Listeneintrages die folgenden Schritte ausführt:
a) Überprüfen, ob ein Listeneintrag für ein Mobiltelefon (2) mit einer höheren Priorität (13) als dem für eine bestehende Verbindung (4, 5) verwendete Mobiletelefons (2) existiert,
b) bei positiver Überprüfung:
- Beenden der bestehenden Verbindung (4, 5),
- Auswählen eines Mobiltelefons (2) mit einer höheren Priorität (13) aus der Liste (17), und
- Aufbauen einer Verbindung (4, 5) zwischen dem elektronischen Gerät (1) und dem Datennetzwerk (7) über das ausgewählte Mobiltelefon (2),
c) bei negativer Überprüfung:
- Beibehalten der bestehenden Verbindung (4, 5),
d) Übertragen von Daten von und zu dem Datennetz (7) durch das elektronische Gerät (1) über die Verbindung (4, 5).

2. Verfahren nach Anspruch 1,
**dadurch gekennzeichnet, dass**
das elektronische Gerät (1) eine Liste (12) mit Gerätekennungen (8) und darin gespeicherten, benutzerdefinierten Prioritäten (13) umfasst und im Schritt b) des Mobiltelefons (2) mit der höchsten benutzerdefinierten Priorität (13) ausgewählt wird.

3. Verfahren nach Anspruch 1,
**dadurch gekennzeichnet, dass**
die Verbindungsqualität, etwa die Netzfeldstärke oder Datenübertragungsrate, zu jedem gefundenen Mobiltelefon (2) ermittelt wird und im Schritt b) das Mobiltelefon (2) mit der besten ermittelten Verbindungsqualität ausgewählt wird.

4. Verfahren nach Anspruch 1,
**dadurch gekennzeichnet, dass**
Tarifinformationen für eine Verbindung (5) von jedem gefundenen Mobiltelefon (2) zu dem Datennetz (7) bereitgestellt werden und im Schritt b) das Mobiltelefon (2) mit dem günstigsten Tarif ausgewählt wird.

5. Verfahren nach einem der vorherigen Ansprüche,
**dadurch gekennzeichnet, dass**
im Schritt b) zum Aufbauen der Verbindung (4, 5) das Bluetooth Dial Up Network (DUN) Profil verwendet wird.

6. Mobiltelefon (2) mit einer ersten drahtlosen Nahbereichsfunkschnittstelle zum Datenaustausch mit einem elektronischen Gerät (1) und einer zweiten drahtlosen Schnittstelle zum Datenaustausch mit einem Datennetz (6, 7)
**dadurch gekennzeichnet, dass**
das Mobiltelefon (2) zum Ausführen eines Verfahrens nach einem der Ansprüche 1 bis 5 eingerichtet ist.

7. Mobiltelefon (2) nach Anspruch 6,
**dadurch gekennzeichnet, dass**
die erste drahtlose Nahbereichsfunkschnittstelle einem der folgenden Standards entspricht: Bluetooth oder IrDA.

8. Mobiltelefon (2) nach einem der Ansprüche 6 oder 7,
**dadurch gekennzeichnet, dass**
die zweite drahtlose Schnittstelle einem der folgenden Standards entspricht: GSM Data, GPRS, HSCSD oder UMTS.

9. Elektronisches Gerät (1) mit einer drahtlosen Nahbereichsfunkschnittstelle (14) zum Datenaustausch mit einem Mobiltelefon (2),
**dadurch gekennzeichnet, dass**
das Mobiltelefon (2) eine Liste (17) mit aktuell gefundenen Mobiltelefonen (2) und anhand vorbestimmter Merkmale bestimmten Priorität (13) der Mobiltelefone (2) führt und zum Ausführen eines Verfahrens nach einem der Ansprüche 1 bis 5 eingerichtet ist.

10. Elektronisches Gerät (1) nach Anspruch 9,
**dadurch gekennzeichnet, dass**
die drahtlose Nahbereichsfunkschnittstelle (14) einem der folgenden Standards entspricht: Bluetooth oder IrDA.

11. Computerprogrammprodukt mit Programmcodes zum Durchführen eines Verfahrens nach einem der Ansprüche 1 bis 5, wenn das Programm auf einem Prozessor (9) abläuft.
